Europäisches Patentamt

European Patent Office

Office européen des brevets

(11) Veröffentlichungsnummer: **0 517 336 A2**

# (12) EUROPÄISCHE PATENTANMELDUNG

(21) Anmeldenummer: **92201607.6**

(22) Anmeldetag: **04.06.92**

(51) Int. Cl.⁵: **H04B 1/38**

(30) Priorität: **07.06.91 DE 4118849**

(43) Veröffentlichungstag der Anmeldung:
**09.12.92 Patentblatt 92/50**

(84) Benannte Vertragsstaaten:
**DE FR GB IT**

(71) Anmelder: **Philips Patentverwaltung GmbH**
**Wendenstrasse 35 Postfach 10 51 49**
**W-2000 Hamburg 1(DE)**

(84) **DE**

(71) Anmelder: **N.V. Philips' Gloeilampenfabrieken**
**Groenewoudseweg 1**
**NL-5621 BA Eindhoven(NL)**

(84) **FR GB IT**

(72) Erfinder: **Berger, Fritz, c/o Philips**
**Patentverwaltung GmbH**
**Wendenstrasse 35**
**W-2000 Hamburg 1(DE)**

(74) Vertreter: **Peuckert, Hermann, Dipl.-Ing. et al**
**Philips Patentverwaltung GmbH**
**Wendenstrasse 35 Postfach 10 51 49**
**W-2000 Hamburg 1(DE)**

(54) **Mobilfunkgerät.**

(57) 2.1 Die Erfindung betrifft ein Mobilfunkgerät mit einer Bedieneinrichtung und mit wenigstens einem Betriebsparameter enthaltenden Festwertlesespeicher, wobei eine zuverlässig wirkende Vorkehrung zur Identifikation des Mobilfunkgerätes getroffen sein soll.

2.2 Hierzu wird vorgeschlagen, in dem Betriebsparameter enthaltenden Festwertlesespeicher die individuelle Fabriknummer zu speichern.

EP 0 517 336 A2

Die Erfindung betrifft ein Mobilfunkgerät mit einer Bedieneinrichtung und mit wenigstens einem Betriebsparameter enthaltenden Festwertlesespeicher.

In EP-A2-0 176 818, H04L 1/02 ist eine Schaltungsanordnung zur Temperaturkompensation von Oszillatoren beschrieben, bei welcher in einem Festwertlesespeicher zu verschiedenen Temperaturwerten bestimmte Korrekturwerte gespeichert sind. Dabei ist davon ausgegangen, daß die in einem Mobilfunkgerät erzeugten Frequenzen über einen relativ großen Temperaturbereich von minus 20 Grad C bis plus 55 Grad C stabil bleiben müssen. Mittels eines Temperatursensors und eines nachgeschalteten Analog-Digital-Wandlers wird ein von der Temperatur des Gerätes abhängiges Digitalsignal erzeugt, das zur Adressierung des Festwertlesespeichers dient. Unter der durch das Datensignal definierten Adresse ist im Festwertlesespeicher ein der ermittelten Temperatur zugeordneter Korrekturwert gespeichert, der mittels des Adreßsignals ausgewählt und zur Steuerung des spannungsgesteuerten Oszillators verwendet wird. Die den Temperaturen zugeordneten Korrekturwerte sind geräteabhängig und werden beim Einmessen eines Mobilfunkgerätes wie auch andere gerätespezifische Betriebsparameter ermittelt und in den Speicher eingegeben. Wird der Speicher gegen einen anderen Speicher mit anderen Werten ausgetauscht, so ist das Gerät nicht mehr ausreichend betriebsfähig, da die Frequenzen nicht mehr mit der entsprechenden Genauigkeit und Temperaturkonstanz erzeugt werden können.

Einem Mobilfunkgerät muß zum Betrieb in einem Mobilfunksystem eine Rufnummer zugeordnet sein, damit es einerseits selbst angerufen werden kann und andererseits die Gebühren für die von ihm ausgehenden Gespräche dem Betreiber des Gerätes in Rechnung gestellt werden können. Zu diesem Zweck hat ein Mobilfunkgerät eine Kartenlesevorrichtung, in die eine Identifikationskarte eingeschoben werden kann. Diese Identifikationskarte trägt unter anderem die Rufnummer. Dadurch ist es einem Karteninhaber möglich, sich jedes beliebigen derartig ausgerüsteten und für das betreffende Mobilfunksystem überhaupt zugelassenen Mobilfunkgerätes zu bedienen. Dies bedeutet andererseits, daß ein z.B. gestohlenes Mobilfunkgerät ohne weiteres benutzt werden kann. Es könnte zwar anhand seiner Fabriknummer identifiziert werden, was jedoch praktisch nur im Fall einer Reparatur möglich wäre. Andererseits ist es nicht ausgeschlossen, daß außen am Gehäuse des Mobilfunkgerätes angebrachte Fabriknummern entfernt werden.

In EP-A2-0 113 662 ist ein zellulares Mobilfunksystem beschrieben, wobei in der Beschreibungseinleitung bemerkt ist, daß Mobilfunkgeräte intelligente Geräte sind, in denen auch dauerhaft Informationen gespeichert sein können, beispielsweise die Fabriknummer des Herstellers. Es ist jedoch kein Hinweis darauf entnehmbar, in welcher Weise die Fabriknummer auswertbar sein könnte.

Anläßlich der Normung des zukünftigen paneuropäischen Mobilfunksystems (GSM-System) ist auch über Möglichkeiten zur Sicherung von Mobilfunkgeräten diskutiert worden. Im Aufsatz "Overview of the GSM services and facilities" auf Seiten 1b/1 bis 1b/12 im Tagungsband "Conference Proceedings, Digital Cellular Radio Conference, Hagen, October 12 bis 14, 1988" ist ausgeführt, daß in jedem Mobilfunkgerät im GSM-System eine Identifikationsnummer gespeichert sein wird, die sogenannte International Mobile Station Equipment Identity (IMEI). Sie kann in dem Netzwerk, in dem das Mobilfunkgerät betrieben wird, zu jeder Zeit abgefragt werden. Jede Identifikationsnummer (IMEI) wird nur einmal vergeben. Sie ist vom Hersteller in einem gesicherten Speicher im Mobilfunkgerät einzuspeichern und enthält unter anderem die Fabriknummer. Ein Systembetreiber kann dann z. B. ein schwarze Liste anlegen, in der die Identifikationsnummern gestohlener Geräte gespeichert sind. Wird dann zu Beginn eines beabsichtigten Gesprächsaufbaus durch Vergleich der von dem Mobilfunkgerät übermittelten Identifikationsnummer mit den in der schwarzen Liste gespeicherten Identifikationsnummern festgestellt, daß das betreffende Mobilfunkgerät gestohlen ist, so kann einerseits der Gesprächsaufbau verhindert und andererseits über die vom Mobilfunkgerät außerdem übermittelte Rufnummer der gegenwärtige Betreiber des Gerätes festgestellt werden. Es sind in diesem System außerdem gesonderte zentrale Speicher vorgesehen, in welchen die vergebenen Identifikationsnummern abgespeichert sind, so daß die in mißbräuchlicher Absicht vorgenommene Änderung einer eingespeicherten Identifikationsnummer erschwert ist.

Die Erfindung hat sich zur Aufgabe gestellt, die bekannten Sicherungsverfahren zu verbessern und schlägt hierzu vor, daß bei einem Mobilfunkgerät mit einer Bedieneinrichtung und mit wenigstens einem Betriebsparameter enthaltenden Festwertlesespeicher in diesem Festwertlesespeicher die individuelle Fabriknummer gespeichert ist. Hierdurch wird einerseits der die Betriebsparameter enthaltende Festwertlesespeicher besser ausgenützt und es wird andererseits zusätzlich erreicht, daß bei Entfernung des Speichers auch die für einen zuverlässigen Betrieb unabdingbaren Betriebsparameter verlorengehen. Eine weitere Verbesserung wird dadurch erzielt, daß die Fabriknummer für Servicezwecke auf einem Anzeigefeld anzeigbar ist. Hierdurch kann im Reparaturfall der Servicebetrieb ein gestohlenes Gerät anhand einer bei ihm vorliegenden Liste identifizieren, auch wenn die außen angebrachte Fabriknummer entfernt worden ist. Eine Weiterbildung der Erfindung sieht vor, daß die Fabriknummer auf dem Anzeigefeld der Bedieneinrichtung des Mobilfunkgerätes erfolgt.

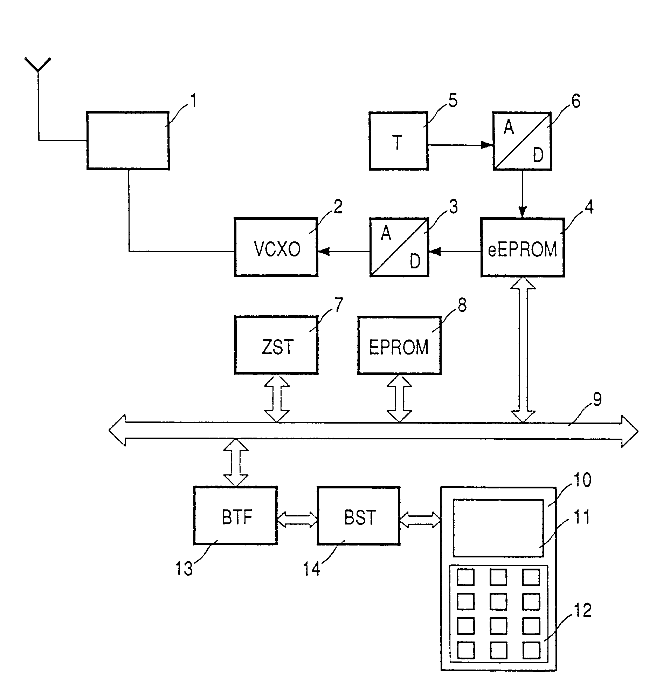

Im folgenden soll die Erfindung anhand eines in der Figur schematisch dargestellten Ausführungsbeispiels näher beschrieben werden.

In der Figur sind Teile eines Mobilfunkgerätes dargestellt, soweit sie zum Verständnis der Erfindung erforderlich sind. Im Empfangsteil 1 des Mobilfunkgerätes ist eine Frequenzsyntheseschaltung angeordnet, welche als Bezugsfrequenz die Oszillatorfrequenz des spannungsgesteuerten Oszillators 2 verwendet. Mit Hilfe dieser Frequenzsyntheseschaltung werden die verschiedenen Zwischenfrequenzen zum Empfang eines ausgewählten Kanals und die Sendefrequenzen zum Senden auf einem zugeordneten Kanal erzeugt. Zur Temperaturstabilisierung des spannungsgesteuerten Oszillators 7 ist ein Temperatursensor 5 vorgesehen, dessen Ausgangswerte mittels eines an seinem Ausgang angeschlossenen Analog/Digital-Wandlers 6 in digitale Datensignale umgesetzt werden, die als Adressignal dem Festwertlesespeicher 4 (eEPROM) zugeführt werden. Mittels des Adressignals wird ein zugeordneter Korrekturwert ausgewählt, der einem Digital/Analog-Wandler 3 zugeführt wird, dessen analoges Ausgangssignal den spannungsgesteuerten Oszillator 2 ansteuert. Beim Abgleich im Fertigungsprozess wird die Leiterplatte mit dem spannungsgesteuerten Oszillator sich langsam ändernden Temperaturen ausgesetzt, wobei gleichzeitig die Abweichungen der Parameter gemessen und nach bestimmten Temperaturintervallen im Festwertlesespeicher 4 als Korrekturwerte abgespeichert werden. In diesem Festwertlesespeicher sind auch weitere für den Betrieb oder für Servicezwecke notwendige Parameter ablegbar.

Beim Fertigungsprozeß wird in diesem Festwertlesespeicher auch die Fabriknummer abgespeichert.

Die Steuerung des Mobilfunkgerätes erfolgt durch die Zentralsteuerung 7, die mit einem leistungsfähigen Prozessor aufgebaut ist. Der Programmspeicher 8 besteht aus einem eEPROM. Diese Einrichtungen sind untereinander sowie mit dem Festwertlesespeicher 4 (eEPROM) und einer Businterfaceschaltung 13 über einen I-Quadrat-C-Bus verbunden. An der Businterfaceschaltung 13 ist über eine weitere Busleitung eine Bussteuerung 14 angeschlossen, welche einen externen Steuerbus steuert, über welchen eine Bedieneinrichtung 10 angeschlossen ist, die eine Anzeigevorrichtung 11 und eine als Tastatur ausgebildete Eingabevorrichtung 12 aufweist. Dem Wartungsdienst ist es möglich, die im eEPROM gespeicherte Fabriknummer auf der Anzeigevorrichtung der Bedieneinrichtung zur Anzeige zu bringen. Über eine in der Figur nicht dargestellte Schnittstelle kann auch ein externes Prüfgerät angeschlossen sein, auf dessen Anzeigevorrichtung ebenfalls die Fabriknummer anzeigbar ist. Durch die Maßnahme, die Fabriknummer in dem weitere Geräteparameter aufweisenden Festwertlesespeicher abzuspeichern, wird einerseites eine gute Ausnützung dessen Speicherkapazität erreicht und andererseits bewirkt, daß eine Veränderung der abgespeicherten Fabriknummer ohne nachteilige Folgen nicht möglich ist. Durch die einfache Identifizierungsmöglichkeit der abgespeicherten Fabriknummer durch den Wartungsdienst ist das Erkennen gestohlener Mobilfunkgeräte auf sehr einfache Weise möglich.

**Patentansprüche**

1. Mobilfunkgerät mit einer Bedieneinrichtung und mit wenigstens einem Betriebsparameter enthaltenden Festwertlesespeicher,
dadurch gekennzeichnet,
daß in diesem Festwertlesespeicher die individuelle Fabriknummer gespeichert ist.

2. Mobilfunkgerät nach Anspruch 1,
dadurch gekennzeichnet,
daß die Fabriknummer für Servicezwecke auf einem Anzeigefeld anzeigbar ist.

3. Mobilfunkgerät nach Anspruch 1,
dadurch gekennzeichnet,
daß die Gerätenummer auf dem Anzeigefeld der Bedieneinrichtung des Mobilfunkgerätes anzeigbar ist.